(19) Europäisches Patentamt

European Patent Office

Office européen des brevets

(11) **EP 1 389 888 A1**

(12) **EUROPEAN PATENT APPLICATION**

(43) Date of publication:
**18.02.2004 Bulletin 2004/08**

(51) Int Cl.⁷: **H04Q 7/38**

(21) Application number: **03254991.7**

(22) Date of filing: **12.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **14.08.2002 GB 0218925**

(71) Applicant: **Hutchison Whampoa Three G IP (Bahamas) Limited**
**Nassau, New Providence (BS)**

(72) Inventor: **Danneel, Jerome**
**Maidenhead Berkshire SL6 8RG (GB)**

(74) Representative: **Butcher, Ian James et al**
**A.A. Thornton & Co.**
**235 High Holborn**
**London WC1V 7LE (GB)**

(54) **Dynamic adjustment of resource thresholds based on cell loading in mobile communications networks**

(57) The present idea proposes to remove the fixed limit imposed on the maximum amount of resources per user and to dynamically adjust the value of this threshold based on the cell loading in order to offer a better service to some users when the network has sufficient capacity to accommodate them. The present idea does not discuss the algorithm that decides how many resources to allocate to a user, but a way to modify the thresholds used by the algorithm, whatever this algorithm actually is.

Figure 2: Dynamic adjustment of *MaxDLPowerPerUser* with present proposition.

**Description**

The present invention relates to resource thresholds set by mobile communication network operators and in particular to a method for dynamically modifying the thresholds so as to improve user experience when a network is unloaded.

Background

In a Wideband-Code Division Multiple Access (W-CDMA) network, the more resources given to a single mobile terminal user, the fewer mobile terminals the network can accommodate. An example of the resources shared between mobile terminals is the power in downlink (DL) and the interference in uplink (UL). Unlike Time Division Multiple Access (TDMA) networks, where a Base Transceiver Station (BTS) transmits to only one mobile terminal at a time, a W-CDMA BTS transmits continuously to all mobile terminals at the same time. Each mobile terminal must correctly decode its own signal, which is swamped by the noise created by the signals for other mobile terminals. This decoding is achieved by processing. However, the ability of the processing to correctly decode one signal depends on the ratio between the power of the wanted signal and the power of the noise. A BTS transmits all the signals in the whole cell and cannot differentiate between mobile terminals. However, the BTS is able to give a different amount of power to the individual signals corresponding to each mobile terminal so that the ratio of wanted signal to other signals is met for each mobile terminal. Basically, when the BTS transmits 20 Watts in the cell, there may be 1 Watt for mobile terminal 1, 3W for mobile terminal 2, 1W for mobile terminal 3, etc. Each mobile terminal receives the 20W, but only a small fraction of the 20W is their signal. From this, it follows that the BTS must also give to each mobile terminal the minimum power needed because any unnecessary power given to one mobile terminal becomes noise for all the other mobile terminals.

The BTS (or the RNC (Radio Network Controller), depending on where the function is actually located) decides how much power to give to each mobile terminal using principles such as:

1) the higher the path loss, then the more power is needed.
2) the higher the bit rate, then the more power is needed.
3) the higher the level of existing noise, then the more power is needed.

When a new mobile terminal comes in the system, the BTS/RNC cannot control the path loss of this mobile terminal or the existing noise (also called cell load), but it can control the power, so if the power requested by a new mobile terminal is too high, then the call is rejected.

Operators usually define a maximum amount of resources, in downlink as well as uplink, which can be allocated to each mobile terminal user. For example, the maximum transmit power for the downlink and maximum received noise for the uplink. By doing this, the network may refuse to serve mobile terminals that would require too many resources, and hence can save capacity for other mobile terminals.

For some services that support variable bit rates, the BTS/RNC can also control the bit rate. In that case, if the power requested for a high bit rate is above the threshold, then the BTS/RNC may allocate a lower bit rate so that the power needed is below the threshold.

The threshold on power, for example, is used not only during the admission of a new call but also during the lifetime of the call. Indeed, the power transmitted by the BTS to one mobile terminal continuously changes with time due to changing radio conditions (mainly path loss but also interference, etc.). Therefore, if during the call, the power comes to increase above the threshold, the BTS/RNC may decide to take an action to bring it down (and hence not interfere with other calls). For instance it may either terminate the call or decrease the bit rate.

When a cell is planned, the path loss, the bit rate, the cell loading and the number of users (i.e. the power per user) are matched as well as possible in order to guarantee the coverage and capacity to expected customers.

However, a drawback of these implementations is that, by having a fixed threshold for the maximum amount of power (or other resources) per mobile terminal, a mobile terminal may be rejected when the network is unloaded, although there would be no harm in allocating more resources than usual to this user. There would be benefits in increasing the threshold for the maximum amount of resources given to this user because he could experience a better quality of service, i.e. longer coverage range (for real time services), higher throughput (for non real time services) or better signal strength in areas of poor signal quality e.g. in buildings etc.

Dynamic bit rate allocation based on cell loading is something which is commonly used today by all manufacturers. The BTS or RNC allocates a high bit rate if cell loading is low and a low bit rate if cell loading is high.

The concept of the threshold on the amount of power allocated to one user at call setup or during the call is widely used in the industry. As explained before, if the power required by one user is above the threshold, then the call is not granted or is downgraded. However, this threshold is always fixed and set by the operator.

Summary of the Invention

The present idea proposes to remove the fixed limit imposed on the maximum amount of resources per user and to dynamically adjust the value of this threshold based on the cell loading in order to offer a better service to some users when the network has sufficient capacity to accommodate them. The present idea does not discuss the algorithm that decides how many resources to allocate to a user, but a way to modify the thresholds used by the algorithm, whatever this algorithm actually is.

The present invention provides a method of operating a mobile telecommunications network in which a base transceiver station is enabled to establish communication links simultaneously with a plurality of mobile terminals, the method comprising:

determining at least one threshold representing a maximum amount of a system resource which may be allocated to each of said communication links; and
setting up said communication links including allocating an amount of said system resource to each such link not greater than said threshold;

wherein said step of determining said threshold comprises determining overall cell load and changing said threshold based on at least one predetermined relationship between said determined cell load and said threshold.

Brief description of the drawings

An embodiment of the invention will now be described by way of example only and with reference to the accompanying drawings in which:

Figure 1 shows coverage and bit rates with fixed parameters in a network as known in the prior art.
Figure 2 shows the relationship between MaxDLPowerPerUser and DLCellLoadThreshold for dynamic adjustment of MaxDLPowerPerUser in one embodiment of the present invention.
Figure 3 shows coverage and bit rates with dynamic parameters in an unloaded network in one embodiment of the present invention.
Figure 4 shows the relationship between MaxDLPowerPerUser and DLCellLoadThreshold for dynamic adjustment of MaxDLPowerPerUser in another embodiment of the present invention.

Description of the preferred embodiment of the invention

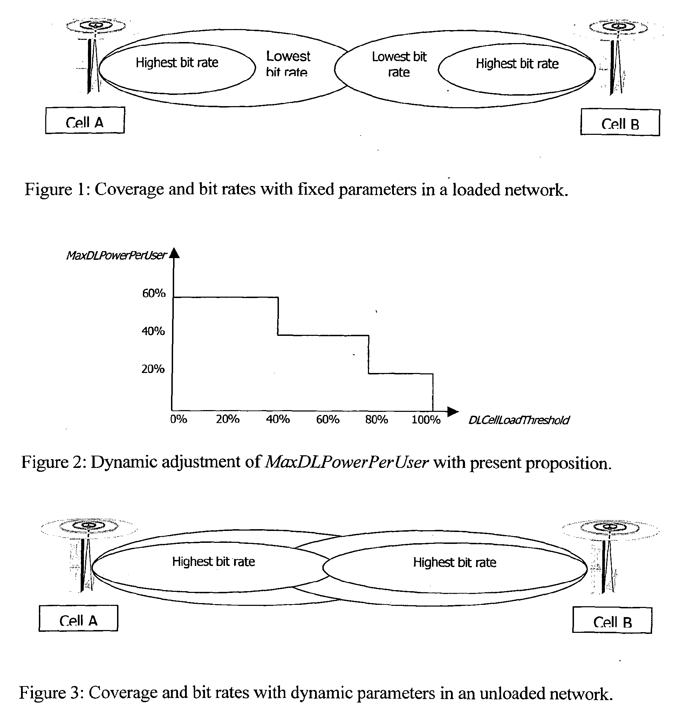

As discussed above, in W-CDMA networks the operator can set the maximum amount of resources that can be allocated to a user at any point in time by Operation and Maintenance (O & M) parameter settings on a cell basis. For instance, in the downlink, if the resource is power the threshold per user will be specified as a percentage of the total transmit power available in the power amplifier (PA). The power threshold will be named MaxDLPowerPerUser. The actual value of this parameter will be optimised by the operator in order to make sure that it can serve enough users with a sufficient quality of service when the network is highly loaded. For instance, the operator can set MaxDLPowerPerUser to 20%. As a result when the network is heavily loaded, the highest bit rate is available only in a limited part of the cell. Therefore, when a terminal is located at the cell edge, it can only access the network at the lowest bit rate (see figure 1).

In the preferred embodiment of the present invention, the threshold is varied in a step-wise manner in relation to the cell load. It will be appreciated that the relationship between cell load and threshold should be an inverse one. In other words the greater the cell loading, the smaller the threshold of resource available per terminal. Thus, instead of using a single threshold, there are a range of resource thresholds with corresponding cell load thresholds.

A list of pairs of parameters are defined. Each pair is made up of one threshold relative to the cell load, CellLoadThreshold[i] and one parameter relative to the maximum resources per user, MaxResourcesPerUser[i]. If at one point in time, the current cell load exceeds threshold [i], then the maximum amount of resources given to one single user becomes parameter [i].

For example, 3 pairs of parameters could be defined in the following way:

DLCellLoadThreshold[1] = 0% ; MaxDLPowerPerUser[1] = 60%

DLCellLoadThreshold[2] = 40% ; MaxDLPowerPerUser[2] = 40%

DLCellLoadThreshold[3] = 80% ; MaxDLPowerPerUser[3] = 20%

At any point in time or according to a defined periodicity, the Universal Mobile Telecommunication System (UMTS) Terrestrial Radio Access Network (UTRAN) can dynamically modify the limit per user. When a cell load threshold is reached the power limit is modified accordingly. The modified limit can be applied to new calls only but preferably is also applied to ongoing calls.

In the preferred embodiment, the maximum allowable DL power per user will vary according to the downlink cell load as depicted in figure 2.

In an alternative embodiment, the relationship between cell load (CellLoadThreshold[i]) and the maximum resources per user (MaxResourcesPerUser[i]) is also defined per type of bearer (RAB type). This is because different services have different levels of importance as well as different requirements in term of amount of resources per user. The operator is therefore able to optimise the relationship per type of service (e.g. voice calls, video calls, packet services, etc.).

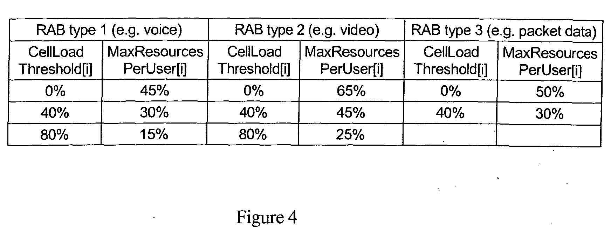

This embodiment can be represented by the table shown in Figure 4.

In the embodiments discussed above, bit rate availability will be the same as in figure 1 when the network is loaded. However, when the network is unloaded, the coverage of the highest bit rate will be increased as shown in figure 3.

As represented in figure 3 the highest bit rate is available all over the network when the load is low enough without damaging the network stability (if the parameters and thresholds are correctly optimised). Therefore, the user experience is improved in certain areas.

As a consequence of this dynamic adjustment of the maximum amount of resources available to one single user, the coverage and service area will move according to the cell load. The operator shall optimise the load thresholds and associated resource limit per user in order to maximise the network stability in case of high load and the user experience in case of low load. For example, users in areas of typically poor reception, such as inside buildings, may experience an improved service.

In order to define the actual values of the parameters to implement in the network (CellLoadThreshold[i], MaxResourcesPerUser[i]), the operator should perform measurements on the amount of resources typically used by each type of bearer under different cell load conditions, and then draw statistics from these measurements. The actual calculation of the parameters values will depend on the network planning, the cell size, the environment, the traffic mix in the network (proportion of voice/video calls versus packet calls), the relative prioritisation of the services defined by the operator, etc."

As described above, when a cell becomes heavily loaded, after a period of low load, the MaxResourcePerUser will decrease. In this case, provision should be made for the way in which mobile terminals which are using a level of resources higher than the forthcoming MaxResourcePerUser threshold level are dealt with. For example, using the above figures, if the cell load is 20%, the MaxDLPowerPerUser is set to 60%. A particular mobile terminal may be allocated 50% of the power available. In time, the cell load increases to 50% and MaxDLPowerPerUser decreases to 40%. The mobile terminal in question is using more power than allowed by the RNC/BTS and action must be taken to reduce the power used by the mobile terminal. One option is for the call to be downgraded by, for example, reducing the bit rate and consequentially reducing the power below the new threshold. Alternatively, if the call can't be downgraded, it may be terminated.

As noted above, the present invention is not concerned with the way in which resources are allocated to individual mobile terminals, but is instead concerned with the resource thresholds within which the systems which do allocate resources to individual terminals work. The amount of resources allocated to an individual terminal is determined on the basis of factors such as path loss, bit rate required, level of existing noise etc, however, there are maximum resource levels which are generally preset and which can not be exceeded by individual mobile terminals. The present invention is concerned with the variation of these maximum resource levels, in particular, the raising of these levels during periods of low cell load. The allocation of resources to individual mobile terminals is carried out by conventional methods within the maximum resource levels which are dynamically adjusted by the present invention.

An advantage of the present invention is that all exchanges of information happen between the RNC and the BTS or within the RNC. Nothing needs to be transmitted to or from the terminal and hence no extra signalling needs result from this invention. Indeed, since the resources per user may be measured at the BTS, there is no need to inform the terminal if the limit is modified during a call, thus signalling over the air interface can be avoided.

In the foregoing, it has been indicated that the present invention can be applied to any resource thresholds which are conventionally fixed and which prevent individual mobile terminals from gaining better signal quality in periods of low cell load when more resources could be physically allocated to any given mobile terminal. In particular, the present invention has been described with application to power in the downlink in which case the present invention is particularly advantageous. The total power available in any one BTS is limited by the power available in the power amplifier. Hence, the maximum power that can be utilised by any one signal corresponding to a mobile terminal is limited to a fraction of the total power available in the power amplifier. This is in contrast to other resources which may not be so physically limited. Fixed thresholds are therefore applied to power per user so that in times of high cell load there is enough power available to accommodate more users. However, in periods of low cell load the limit on power per user means that much of the total power available goes unused when it could be utilised by mobile terminals which require a better signal. By dynamically adjusting the power thresholds during periods of low cell load, the present invention addresses the problems associated with the fixed thresholds conventionally used. Therefore the present invention is particularly applicable to power which has the above described physical upper limit on total power available.

In the foregoing, the resource allocated to users is power, since this is the most critical resource. However, the parameter whose threshold is to be varied could be another resource such as bit rate, hardware resource or transmission resource. The principles illustrated in the figures could apply equally to these other resources. It will be appreciated that any number of parameters can be used to achieve a step-wise relationship between call loading and maximum available resource.

**Claims**

1. A method of operating a mobile telecommunications network in which a base transceiver station is enabled to establish communication links simultaneously with a plurality of mobile terminals, the method comprising:

   determining at least one threshold representing a maximum amount of a system resource which may be allocated to each of said communication links; and
   setting up said communication links including allocating an amount of said system resource to each such link not greater than said threshold;

   wherein said step of determining said threshold comprises determining overall cell load and changing said threshold based on at least one predetermined relationship between said determined cell load and said threshold.

2. The method of claim 1 wherein the at least one predetermined relationship is an inverse one.

3. The method of claim 2 wherein the at least one threshold varies in a stepwise fashion in relation to cell load

4. The method of any preceding claim in which the system resource is a downlink resource.

5. The method as claimed in any preceding claim in which the cell load and corresponding maximum amount of system resource are determined at regular intervals.

6. The method as claimed in any preceding claim in which the determined maximum amount of system resource is applied to all new communications established on the network.

7. The method as claimed in claim 6 in which the determined maximum amount of system resource is additionally applied to existing communications established on the network.

8. The method of any preceding claim in which the system resource is transmit power.

9. The method of claim 8 wherein the maximum amount of transmit power is measured as a percentage of the total power available in the power amplifier of the base transceiver station.

10. The method of any preceding claim wherein the at least one predetermined relationship is one predetermined relationship which is applied to communication links of all types.

11. The method of claim 10 when dependent on claim 9 wherein said one predetermined relationship is, for a cell load between zero and forty percent, the maximum amount of power is sixty percent of the power available from the power amplifier, for a cell load between forty and eighty percent, the maximum amount of power is forty percent of the power available from the power amplifier, and for a cell load higher than eighty percent, the maximum amount of power is twenty percent of the power available from the power amplifier.

12. A method as claimed in claims 1 to 9 wherein each of said at least one predetermined relationships is applied to a communication link of a specific type.

**13.** A method as claimed in claim 12 wherein said at least one predetermined relationship is three predetermined relationships and each relationship is specific to each of three types of communication link.

**14.** The method of claim 13 wherein the three types of communication link are voice, video and packet data.

**15.** A method as claimed in claim 14 when ultimately dependent on claim 9 wherein the three predetermined relationships are;

for voice communication links, for a cell load between zero and forty percent, the maximum amount of power is forty five percent of the power available from the power amplifier, for a cell load between forty and eighty percent, the maximum amount of power is thirty percent of the power available from the power amplifier, and for a cell load higher than eighty percent, the maximum amount of power is fifteen percent of the power available from the power amplifier;

for video communication links, for a cell load between zero and forty percent, the maximum amount of power is sixty five percent of the power available from the power amplifier, for a cell load between forty and eighty percent, the maximum amount of power is forty fivr percent of the power available from the power amplifier, and for a cell load higher than eighty percent, the maximum amount of power is twenty five percent of the power available from the power amplifier;

for packet data communication links, for a cell load between zero and forty percent, the maximum amount of power is fifty percent of the power available from the power amplifier, and for a cell load higher than forty percent, the maximum amount of power is thirty percent of the power available from the power amplifier.

Highest bit rate  Lowest bit rate  Lowest bit rate  Highest bit rate

Cell A  Cell B

Figure 1: Coverage and bit rates with fixed parameters in a loaded network.

*MaxDLPowerPerUser*

60%

40%

20%

0%  20%  40%  60%  80%  100%  *DLCellLoadThreshold*

Figure 2: Dynamic adjustment of *MaxDLPowerPerUser* with present proposition.

Highest bit rate  Highest bit rate

Cell A  Cell B

Figure 3: Coverage and bit rates with dynamic parameters in an unloaded network.

| RAB type 1 (e.g. voice) | | RAB type 2 (e.g. video) | | RAB type 3 (e.g. packet data) | |
|---|---|---|---|---|---|
| CellLoad Threshold[i] | MaxResources PerUser[i] | CellLoad Threshold[i] | MaxResources PerUser[i] | CellLoad Threshold[i] | MaxResources PerUser[i] |
| 0% | 45% | 0% | 65% | 0% | 50% |
| 40% | 30% | 40% | 45% | 40% | 30% |
| 80% | 15% | 80% | 25% | | |

Figure 4

European Patent Office

**EUROPEAN SEARCH REPORT**

Application Number

EP 03 25 4991

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 189 472 A (LUCENT TECHNOLOGIES INC) 20 March 2002 (2002-03-20) | 1-4 | H04Q7/38 |
| Y | * column 2, line 49 - column 3, line 6 * | 5-10, 12-14 | |
| A | * column 4, line 54 - column 6, line 42 * * figures 1,2 * | 11,15 | |
| | --- | | |
| X | EP 1 100 283 A (CIT ALCATEL) 16 May 2001 (2001-05-16) | 1 | |
| Y | * column 2, line 23 - column 3, line 16 * | 5-10, 12-14 | |
| | * column 5, line 17 - line 42 * | | |
| | --- | | |
| A | EP 1 126 734 A (LUCENT TECHNOLOGIES INC) 22 August 2001 (2001-08-22) * paragraph [0012] - paragraph [0013] * * paragraph [0017] - paragraph [0021] * | 1-15 | |
| | --- | | |
| A | US 6 266 531 B1 (BHATIA RANJIT ET AL) 24 July 2001 (2001-07-24) * column 2, line 54 - column 3, line 2 * * column 3, line 48 - column 4, line 27 * * figures 3,4 * | 1,11,15 | TECHNICAL FIELDS SEARCHED (Int.Cl.7) H04Q |
| | --- | | |
| A | IRAQI Y ET AL: "An adaptive distributed call admission control for QoS-sensitive wireless mobile networks" IEEE 2000, vol. 1, 23 September 2000 (2000-09-23), pages 449-453, XP010532541 paragraphs II, VI and VII.B | 1 | |
| | ----- | | |

The present search report has been drawn up for all claims

| Place of search | Date of completion of the search | Examiner |
|---|---|---|
| MUNICH | 5 November 2003 | Rabe, M |

EPO FORM 1503 03.82 (P04C01)

## ANNEX TO THE EUROPEAN SEARCH REPORT
## ON EUROPEAN PATENT APPLICATION NO.

EP 03 25 4991

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2003

| Patent document cited in search report | | Publication date | Patent family member(s) | | Publication date |
|---|---|---|---|---|---|
| EP 1189472 | A | 20-03-2002 | EP<br>JP | 1189472 A1<br>2002112329 A | 20-03-2002<br>12-04-2002 |
| EP 1100283 | A | 16-05-2001 | EP | 1100283 A1 | 16-05-2001 |
| EP 1126734 | A | 22-08-2001 | EP<br>AU<br>BR<br>CA<br>CN<br>JP<br>US | 1126734 A1<br>1835601 A<br>0100372 A<br>2330176 A1<br>1309520 A<br>2001275155 A<br>2001016497 A1 | 22-08-2001<br>16-08-2001<br>02-10-2001<br>15-08-2001<br>22-08-2001<br>05-10-2001<br>23-08-2001 |
| US 6266531 | B1 | 24-07-2001 | NONE | | |